# FASCICULE DE BREVET EUROPEEN

(11) **EP 3 355 016 B1**
(45) Date de publication et mention de la délivrance du brevet: **08.07.2020**
(21) Numéro de dépôt: 18305087.1
(22) Date de dépôt: 30.01.2018
(51) Int. Cl.: F27D 11/00, A47J 37/06, F27D 99/00, H05B 3/34

(54) **FONDOIR**
SCHMELZPLATTE
MELTER

(30) Priorité: 31.01.2017 FR 1750762
(43) Date de publication de la demande: 01.08.2018
(73) Titulaire: Volumetal, 49300 Le Puy Saint-Bonnet (FR)
(72) Inventeur: AUDUSSEAU, Fabrice, 49300 Le Puy Saint-Bonnet (FR)
(74) Mandataire: Jacobacci Coralis Harle

(56) Documents cités:
- DE-A1-102009 037 229
- GB-A- 2 061 091
- US-B1- 6 274 847
- US-B1- 6 509 550

## Description

### DOMAINE TECHNIQUE AUQUEL SE RAPPORTE L'INVENTION

L'invention se rapporte à un fondoir pour transformer un produit de l'état solide à un état liquide.

### ARRIERE-PLAN TECHNOLOGIQUE

Pour passer d'un état solide à un état liquide, souvent il suffit d'apporter au produit solide de la chaleur. C'est le cas du fromage pour fondue ou de la graisse de porc pour faire du saindoux ou de la cire pour faire des bougies. On part d'un produit à l'état solide pour le mettre à l'état liquide afin de le mouler puis le produit à l'état liquide redevient solide.

Nous prendrons l'exemple de la fondue de fromages.

La fondue consiste à mettre du fromage dans un caquelon puis le chauffer pour que le fromage à l'état solide se transforme en un fromage à l'état liquide.

Bien souvent on pose le caquelon sur un réchaud à alcool et l'on chauffe.

Lors de la montée en température, le fromage ne doit pas être grillé en raison de la surchauffe de la paroi du caquelon. Puis lorsque le fromage est fondu, il faut réduire l'apport en chaleur, il faut seulement maintenir la température.

Pour produire de la fondue en quantité importante et la distribuer à des consommateurs nombreux, il faut disposer d'un récipient de grand taille qu'il faut chauffer pour transformer les morceaux de fromage en un fromage pâteux voire liquide. Plus la taille du récipient est grande, plus est difficile la mise en température.

A ce jour, on connait des récipients que l'on pose sur une source de chaleur telle un bruleur à gaz qui chauffe le fond du récipient afin de liquéfier le fromage.

Cette solution présente des difficultés en ce sens que la manière de chauffer le fromage est difficile car si les flammes chauffent trop vite le fond du récipient, le fromage va gratiner au contact de la paroi chaude alors qu'il faut le faire fondre.

L'apport de chaleur sous le fond du récipient doit se diffuser dans la matière à chauffer et également dans la paroi latérale du récipient pour la transmettre au contenu.

La qualité du récipient et la maitrise par l'opérateur de son bruleur à gaz sont alors nécessaires. En effet la chaleur produite par les flammes va se diffuser plus vite si le récipient est en cuivre alors que la répartition de la chaleur se fait moins bien pour un récipient en acier ou en aluminium ou en terre cuite.

L'utilisation du gaz est parfois prohibée et on remplace la source de chaleur fonctionnant au gaz par une plaque électrique ou une plaque à induction. Le problème reste le même. Il faut bien connaitre sont générateur de chaleur et son récipient, forme, dimensions, etc. pour éviter de gratiner son fromage car toute la chaleur provient du fond.

La mise en température du récipient, et donc du contenu, peut se faire par la technique du bain marie ce qui limite les risques de griller le fromage.

Selon cette technique le récipient contenant le fromage est placé dans un autre récipient contenant de l'eau qui est chauffée. L'eau entoure le récipient contenant le fromage va s'élever en température et va donc délivrer de l'énergie au récipient contenant le fromage de manière plus uniforme et moins violente.

Le transfert de la chaleur se fait moins rapidement mais offre l'avantage d'être plus doux car au lieu que ce soit une flamme à haute température (plusieurs centaines de degré) en contact avec le récipient, ce n'est que de l'eau à environ 90°C.

L'inconvénient du bain marie c'est qu'il faut ajouter à l'énergie nécessaire pour faire changer d'état le fromage, de l'énergie pour chauffer l'eau du bain marie et le maintenir à température. Cela présente donc un coût supplémentaire. Egalement, il faut compléter le niveau d'eau car il y a une évaporation.

Par ailleurs, il existe encore des appareils de cuisine comme décrits dans le document US-6 274 847.

Cet appareil comporte des moyens de chauffage électrique, sous la forme de tissus chauffant entourant la paroi périphérique du récipient.

Toujours dans cet appareil, l'accès au produit s'effectue au travers d'une ouverture supérieure munie d'un couvercle.

### OBJET DE L'INVENTION

L'invention propose une nouvelle solution.

A cet effet, l'invention a pour objet un fondoir comprenant un récipient métallique destiné à contenir un produit en phase solide et un moyen de chauffage
du récipient, ce fondoir étant caractérisé en ce que la face externe du fond du récipient en acier inoxydable et la face externe de la paroi latérale dudit récipient sont tapissées chacune d'un tissu chauffant indépendant et reliés chacun à une source d'énergie électrique pilotée par un programme de chauffe en référence à des capteurs de température équipant le fondoir et ledit récipient est logé dans une enveloppe ménageant entre la face interne de l'enveloppe et la face externe du récipient couverte de tissus chauffant un espace contenant un isolant thermique.

Selon l'invention, pour prélever le fromage fondu, une canalisation, située à la base du récipient contenant le produit fondu, traverse l'espace délimité par le récipient et l'enveloppe, pour déboucher à l'extérieur dans un moyen de contrôle du débit, avec une partie de la canalisation remplaçant une partie du fond du récipient et constituant un point bas.

D'autres caractéristiques non limitatives et avantageuses du fondoir conforme à l'invention, prises individuellement ou selon toutes les combinaisons techniquement possibles, sont les suivantes :
- le moyen de contrôle du débit est une pompe de dosage volumétrique ;
- le moyen de contrôle du débit est pourvu d'un élément chauffant ;
- le moyen de contrôle du débit consiste en une pompe volumétrique à piston se déplaçant alternativement dans une chambre contrôlée par deux clapets ;
- la paroi latérale est couverte de bandes jointives de tissu chauffant ayant des puissances de chauffe identiques ou différentes, lesdites bandes étant disposées en strates horizontales ;
- le haut du récipient est fermé par un couvercle supportant un moyen d'agitation du contenu du récipient consistant en au moins une pale qui s'étend sur une grande partie de la hauteur du récipient montée sur un arbre rotatif entrainé par un moteur ; le récipient comprend avantageusement une butée anti-rotation pour bloquer la rotation d'une partie de la matière lorsque le moyen d'agitation tourne ;
- le fondoir comprend des capteurs de températures dont certains sont plongés dans le récipient à différentes hauteurs et d'autres sont placés sur le tissu chauffant ;
- la canalisation est également équipée de moyens de chauffage.

### DESCRIPTION DETAILLEE D'UN EXEMPLE DE REALISATION

L'invention sera bien comprise à l'aide de la description ci-après, faite à titre d'exemple non limitatif, en regard des dessins qui représentent :

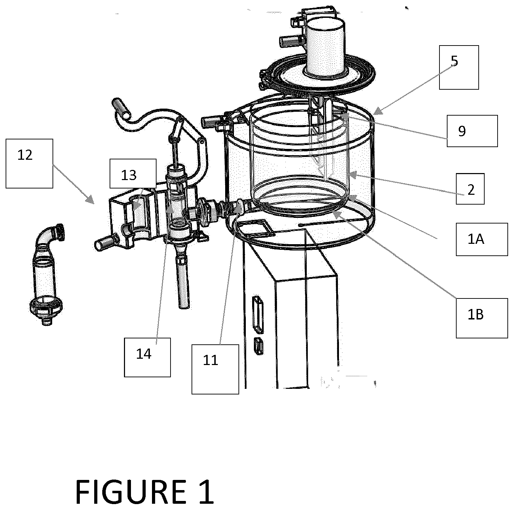

- FIG 1, vue en perspective d'un fondoir selon l'invention,

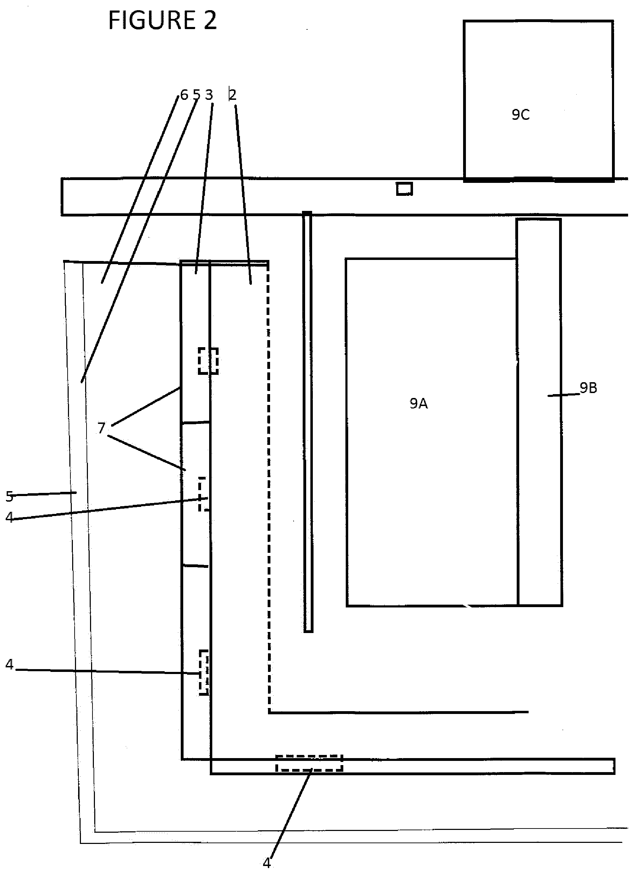

- FIG 2, coupe verticale partielle du fondoir selon la figure 1, représenté schématiquement, et

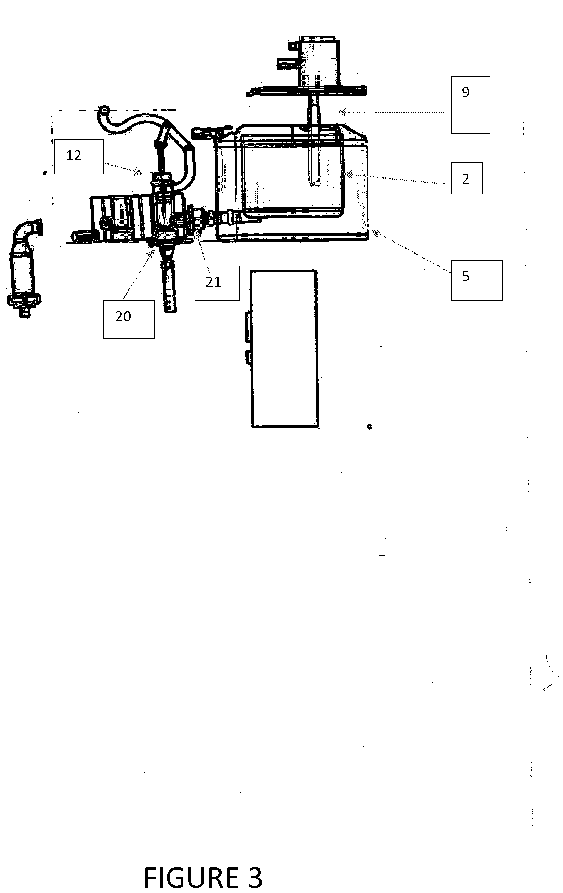

- FIG 3, vue latérale du fondoir selon la figure 1.

En se rapportant au dessin, on voit un fondoir 1 utilisé par exemple pour fondre du fromage.

Ce fondoir 1 comprend un récipient 2 métallique (avantageusement en acier inoxydable) destiné à contenir un produit à fondre et un moyen 3 de chauffage du récipient 2.

Le récipient 2 comporte un fond 1A et une paroi latérale 1B.

Avantageusement, la face externe du fond du récipient 2 en acier inoxydable et la face externe de la paroi latérale dudit récipient 2 sont chacune tapissées d'un tissu 3 chauffant indépendant, reliés chacun à une source d'énergie électrique pilotée par un programme de chauffe en référence à des capteurs 4 de température équipant le fondoir.

Le fondoir 1 peut comporter plusieurs capteurs 4, par exemple :
- un capteur équipant le fond 1A,
- un capteur équipant la paroi latérale 1B, et
- un capteur équipant un moyen 12 de contrôle du débit (décrit après).

Ledit récipient 2 est logé dans une enveloppe 5 rigide ménageant entre la face interne de l'enveloppe 5 et le tissu 3 chauffant appliqué sur la face externe du récipient 2, un espace 6 contenant un isolant thermique.

L'isolation a pour fonction de conserver la chaleur pour la diriger vers l'intérieur et aussi a pour fonction de protéger le personnel d'un contact avec une paroi chaude.

Le tissu 3 chauffant recouvre la face externe du récipient, c'est-à-dire le fond 1A du récipient 2 ainsi que sa paroi latérale 1B.

Avantageusement, le tissu 3 chauffant est fractionné en plusieurs morceaux indépendants qui sont pilotés selon des consignes ou un programme. De manière alternative, le tissu 3 chauffant recouvrant la paroi latérale 1B comprend au moins un morceau qui est piloté selon une consigne unique.

Ainsi, le tissu 3 chauffant recouvrant le fond 1A du récipient 2 est indépendant du tissu 3 chauffant recouvrant la paroi latérale 1B du récipient 2.

Le tissu 3 chauffant couvrant le fond 1A du récipient 2 peut chauffer, alors que tissu 3 chauffant la paroi latérale 1B n'est pas encore alimentée en courant électrique, ou inversement.

Dans une variante, la paroi latérale peut être couverte de bandes 7 jointives de tissu 3 chauffant ayant des puissances de chauffe identiques ou différentes, disposées en strates horizontales.

Ainsi on peut piloter les zones de chauffe en fonction du remplissage du récipient et de l'état de la matière. Par exemple au fur et à mesure que le récipient se vide, on peut couper l'alimentation des bandes supérieures. Les bandes seront jointives ou légèrement superposées.

Le haut du récipient 2 est fermé par un couvercle portant un moyen 9 d'agitation du contenu du récipient.

Ce moyen d'agitation 9 consiste en au moins une pale 9A qui s'étend sur une grande partie de la hauteur du récipient, montée sur un arbre 9B rotatif entrainé par un moteur 9C.

Une butée dite anti rotation est montée sur la face interne du récipient, ou sur le couvercle, pour bloquer la matière lorsque le moyen d'agitation tourne. Il s'agit par exemple d'une lame radiale qui s'étend de bas en haut.

La rotation de la pale 9A tend à entrainer la matière dans un sens mais la butée freine la rotation d'une partie du contenu ce qui permet le mélange par la pale.

On peut utiliser d'autres moyens tels deux pales tournant dans des sens opposés.

Pour prélever le fromage fondu, une canalisation 11 (située à la base du récipient contenant le fromage) traverse l'espace 6 entre le récipient 2 chauffé et l'enveloppe 5 rigide et débouche à l'extérieur dans un moyen 12 de contrôle du débit.

De préférence, cette canalisation 11 est également équipée de moyens de chauffage afin d'éviter la solidification de la matière, par exemple sous la forme d'un tissu chauffant.

Une partie de la canalisation 11 (en l'espèce son extrémité fixée sur le récipient 2) remplace une partie du fond du récipient et constitue un point bas.

L'extrémité de la canalisation 11, qui se fixe sur le récipient 2, est par exemple taillée en sifflet.

De manière alternative, le fond 1A du récipient 2 présente une forme générale en tronc de cône dont :
- la grande base, supérieure, est raccordée à la paroi latérale 1B, et
- la petite base, inférieure, est raccordée à l'extrémité de la canalisation 11.

Dans ce cas, l'extrémité de la canalisation 11 est raccordée à la petite base, avantageusement par le biais d'un coude.

Le moyen 12 de contrôle du débit est une pompe de dosage volumétrique.

Cette pompe de dosage volumétrique 12, située à l'extérieur de l'enveloppe 5, comprend avantageusement un élément 13 chauffant tel du tissu chauffant enveloppant le corps de la pompe (et/ou éventuellement un élément d'isolation thermique) afin d'éviter la solidification de la matière dans la pompe de dosage.

Il s'agit avantageusement d'une pompe volumétrique à piston 14 se déplaçant alternativement dans une chambre contrôlée par deux clapets.

Le volume dans lequel se déplace le piston 14 est entouré d'un tissu chauffant.

Ce tissu chauffant est porté par une chemise qui se positionne autour de la chambre dans lequel le piston se déplace.

Le piston est manœuvré par une poignée de commande placée à l'extrémité d'un levier.

Dans un premier mouvement, le piston aspire le fromage fondu, le clapet positionné en sortie de la chambre est en position fermée et l'autre en entrée de la chambre est en position ouverte.

Lorsque le piston se déplace dans l'autre sens, le clapet situé en entrée de chambre se ferme tandis que l'autre s'ouvre ; le piston pousse ainsi le fromage en dehors de la chambre.

Le fromage doit être suffisamment fluide, donc chaud, pour remplir sans vide la chambre.

La partie de la canalisation située en dehors du fondoir peut également être recouverte d'un tissu chauffant.

Les capteurs de températures seront pour certains plongés dans le récipient à différentes hauteurs, et d'autres sont placés en contact avec le tissu chauffant et le récipient.

On a donc un appareil qui permet de faire fondre un produit avec une plus grande régularité dans la fonction. Le contrôle du processus est plus simple et peut faire l'objet d'un programme pilotant la chauffe, c'est-à-dire modulant l'alimentation électrique de chaque pièce de tissu recouvrant le récipient.

Les clapets 20, 21 seront montés en amont et en aval de la chambre dans laquelle se déplace le piston et sont facilement démontables.

Un accès dans le fond de l'enveloppe 5, situé à l'aplomb de la conduite d'évacuation de la matière, permet d'intervenir facilement.

## Revendications

1. Fondoir comprenant un récipient (2) métallique destiné à contenir un produit à fondre et un moyen (3) de chauffage du récipient (2),
lequel récipient (2) est logé dans une enveloppe (5) qui ménage un espace (6) entre la face interne de l'enveloppe et la face externe du récipient (2) couverte de tissus (3) chauffant, ledit espace (6) contenant un isolant thermique,
lesquels tissus (3) sont reliés à une source électrique pilotée par un programme de chauffe en référence à des capteurs (4) de température équipant le fondoir,
lequel fondoir est **caractérisé en ce que** la face externe du fond du récipient (2) et la face externe de la paroi latérale du récipient (2) en acier inoxydable sont chacune tapissée d'un tissu (3) chauffant, lesquels tissus (3) sont indépendants,
et **en ce que**, pour prélever le fromage fondu, une canalisation (11), située à la base du récipient (2) contenant le produit fondu, traverse l'espace délimité par le récipient (2) et l'enveloppe, pour déboucher à l'extérieur dans un moyen (12) de contrôle du débit, avec une partie de la canalisation remplaçant une partie du fond du récipient (2) et constituant un point bas.

2. Fondoir selon la revendication 1, **caractérisé en ce que** le moyen (12) de contrôle du débit est une pompe de dosage volumétrique.

3. Fondoir selon la revendication 1 ou 2, **caractérisé en ce que** le moyen (12) de contrôle du débit est pourvu d'un élément (13) chauffant et/ou d'un élément d'isolation thermique.

4. Fondoir selon l'une quelconque des revendications 1 à 3, **caractérisé en ce que** le moyen (12) de contrôle du débit consiste en une pompe (12) volumétrique à piston se déplaçant alternativement dans une chambre contrôlée par deux clapets (20, 21).

5. Fondoir selon l'une quelconque des revendications 1 à 4, **caractérisé en ce que** la paroi latérale est couverte de bandes (7) jointives de tissu (3) chauffant ayant des puissances de chauffe identiques ou différentes, lesdites bandes (7) étant disposées en strates horizontales.

6. Fondoir selon l'une quelconque des revendications 1 à 5, **caractérisé en ce que** le haut du récipient (2) est fermé par un couvercle supportant un moyen (9) d'agitation du contenu du récipient (2) consistant en au moins une pale (9A) qui s'étend sur une grande partie de la hauteur du récipient (2) montée sur un arbre (9B) rotatif entrainé par un moteur (9C).

7. Fondoir selon la revendication 6 **caractérisé en ce que** le récipient (2) comprend une butée anti-rotation pour bloquer la rotation d'une partie de la matière lorsque le moyen d'agitation (9) tourne.

8. Fondoir selon l'une quelconque des revendications 1 à 7, **caractérisé en ce qu'**il comprend des capteurs (4) de températures dont certains sont plongés dans le récipient (2) à différentes hauteurs et d'autres sont placés sur le tissu (3) chauffant.

9. Fondoir selon l'une quelconque des revendications 1 à 8, **caractérisé en ce que** la canalisation (11) est également équipée de moyens de chauffage.

## Patentansprüche

1. Schmelzvorrichtung mit einem metallenen Behälter (2), der dazu bestimmt ist, ein zu schmelzendes Produkt aufzunehmen, und einem Mittel (3) zum Erwärmen des Behälters (2),
wobei der Behälter (2) in einer Umhüllung (5) untergebracht ist, die einen Raum (6) zwischen der Innenseite der Umhüllung und der mit Heizgeweben (3) bedeckten Außenseite des Behälters (2) beläßt, wobei der Raum (6) ein Wärmeisoliermittel enthält,
wobei die Gewebe (3) mit einer durch ein Heizprogramm mit Bezug auf Temperatursensoren, mit denen die Schmelzvorrichtung ausgestattet ist, gesteuerten elektrischen Quelle verbunden sind,
wobei die Schmelzvorrichtung **dadurch gekennzeichnet ist, daß** die Außenseite des Bodens des Behälters (2) und die Außenseite der Seitenwand des Behälters (2) aus Edelstahl jeweils mit einem Heizgewebe (3) versehen sind, wobei die Gewebe (3) unabhängig sind,
und daß für die Entnahme des geschmolzenen Käses ein an der Basis des das geschmolzene Produkt enthaltenden Behälters (2) gelegener Kanal (11) den durch den Behälter (2) und die Umhüllung begrenzten Raum durchquert, um nach außen in einem Mittel (12) für die Steuerung des Durchflusses zu münden, wobei ein Teil des Kanals einen Teil des Bodens des Behälters (2) ersetzt und einen tiefgelegenen Punkt bildet.

2. Schmelzvorrichtung gemäß Anspruch 1, **dadurch gekennzeichnet, daß** das Mittel (12) für die Steuerung des Durchflusses eine volumetrische Dosierpumpe ist.

3. Schmelzvorrichtung gemäß Anspruch 1 oder 2, **dadurch gekennzeichnet, daß** das Mittel (12) für die Steuerung des Durchflusses mit einem Heizelement (13) und/oder einem Wärmeisolationselement versehen ist.

4. Schmelzvorrichtung gemäß einem der Ansprüche 1 bis 3, **dadurch gekennzeichnet, daß** das Mittel (12) für die Steuerung des Durchflusses eine volumetrische Pumpe (12) mit einem Kolben ist, der sich in einer durch zwei Klappen (20, 21) gesteuerten Kammer hin und her bewegt.

5. Schmelzvorrichtung gemäß einem der Ansprüche 1 bis 4, **dadurch gekennzeichnet, daß** die Seitenwand mit aneinander angrenzenden Bändern (7) aus Heizgewebe (3) bedeckt ist, die identische oder unterschiedliche Heizleistungen aufweisen, wobei die Bänder (7) in horizontalen Lagen angeordnet sind.

6. Schmelzvorrichtung gemäß einem der Ansprüche 1 bis 5, **dadurch gekennzeichnet, daß** die Oberseite des Behälters (2) mit einem Deckel verschlossen ist, der ein Mittel (9) zum Umrühren des Inhalts des Behälters (2) trägt, das aus mindestens einem an einer durch einen Motor (9C) angetriebenen Welle (9B) befestigten Flügel (9A) besteht, der sich über einen Großteil der Höhe des Behälters (2) erstreckt.

7. Schmelzvorrichtung gemäß Anspruch 6, **dadurch gekennzeichnet, daß** der Behälter (2) einen Drehverhinderungsanschlag aufweist, der die Drehung eines Teils der Materie blockiert, wenn sich das Umrührmittel (9) dreht.

8. Schmelzvorrichtung gemäß einem der Ansprüche 1 bis 7, **dadurch gekennzeichnet, daß** sie Temperatursensoren (4) aufweist, von denen einige in unterschiedlichen Höhen in den Behälter (2) hineinreichen und andere auf dem Heizgewebe (3) angeordnet sind.

9. Schmelzvorrichtung gemäß einem der Ansprüche 1 bis 8, **dadurch gekennzeichnet, daß** der Kanal (11) ebenfalls mit Heizmitteln ausgestattet ist.

## Claims

1. A melter comprising a metal container (2) intended to contain a product to be molten and a means (3) for heating the container (2),
said container (2) being housed in an envelope (5) that provides a space (6) between the inner face of the envelope and the outer face of the container (2) covered with heating fabrics (3), said space (6) containing a heat insulator,
said fabrics (3) being connected to a power source piloted by a heating program in reference to temperature sensors (4) equipping the melter,
said melter being **characterized in that** the outer face of the container (2) bottom and the outer face of the lateral wall of the stainless-steel container (2) are each covered with a heating fabric (3), said fabrics (3) being independent from each other,
and **in that**, to pick-up the molten cheese, a duct (11), located at the base of the container (2) containing the molten product, passes through the space delimited by the container (2) and the envelope, to lead out into a flow control means (12), with a part of the duct replacing a part of the container (2) bottom and forming a low point.

2. The melter according to claim 1, **characterized in that** the flow control means (12) is a positive displacement metering pump.

3. The melter according to claim 1 or 2, **characterized in that** the flow control means (12) is provided with a heating element (13) and/or a heat insulator element.

4. The melter according to any one of claims 1 to 3, **characterized in that** the flow control means (12) consists in a positive displacement pump with a piston reciprocating in a chamber controlled by two flaps (20, 21).

5. The melter according to any one of claims 1 to 4, **characterized in that** the lateral wall is covered with jointed strips (7) of heating fabric (3) having identical or different heating powers, said strips (7) being arranged in horizontal layers.

6. The melter according to any one of claims 1 to 5, **characterized in that** the top of the container (2) is closed by a lid supporting a means (9) for stirring the container (2) content, consisted of at least one blade (9A) extending over a great part of the container (2) height and mounted on a rotary shaft (9B) driven by a motor (9C).

7. The melter according to claim 6, **characterized in that** the container (2) comprises an anti-rotation stop to block the rotation of a part of the matter when the stirring means (9) rotates.

8. The melter according to any one of claims 1 to 7, **characterized in that** it comprises temperature sensors (4), some of which are put down into the container (2) at different heights and others are placed on the heating fabric (3).

9. The melter according to any one of claims 1 to 8, **characterized in that** the duct (11) is also equipped with heating means.
